## Europäisches Patentamt
## European Patent Office
## Office européen des brevets

(11) Veröffentlichungsnummer: **0 226 816**
**B1**

(12) **EUROPÄISCHE PATENTSCHRIFT**

(45) Veröffentlichungstag der Patentschrift:
**14.09.88**

(51) Int. Cl.⁴: **F 16 D 69/04,** B 61 H 5/00

(21) Anmeldenummer: **86115946.5**

(22) Anmeldetag: **17.11.86**

(54) **Bremsbelaghalter für Schienenfahrzeuge.**

(30) Priorität: **09.12.85 DE 3543457**

(73) Patentinhaber: **KNORR-BREMSE AG, Moosacher Strasse 80 Postfach 401060, D-8000 München 40 (DE)**

(43) Veröffentlichungstag der Anmeldung:
**01.07.87 Patentblatt 87/27**

(72) Erfinder: **Schörwerth, Mathias, Lilienstrasse 3, D-8192 Geretsried 1 (DE)**
Erfinder: **Wirth, Xaver, Dr., Birkhuhnweg 18, D-8045 Ismaning (DE)**

(45) Bekanntmachung des Hinweises auf die Patenterteilung:
**14.09.88 Patentblatt 88/37**

(84) Benannte Vertragsstaaten:
**DE FR GB IT**

(56) Entgegenhaltungen:
**DE - A - 2 913 950**
**DE - B - 2 154 041**

## Beschreibung

Die Erfindung betrifft einen Bremsbelaghalter nach dem Gattungsbegriff des Patentanspruches 1.

Bei bekannten Bremsbelaghaltern für Schienenfahrzeuge (siehe z.B. DE-8-2154041), welche zur Sicherung des Bremsbelages einen Querriegel aufweisen, besitzt der Belag innerhalb seiner Führung ein gewisses Spiel in Längsrichtung. Dies führt in manchen Einsatzfällen zu einem Ausschlagen der Belag-Stirnflächen, hervorgerufen infolge ruckartiger Bewegungen des Belages im Halter. Derartige Bewegungen lösen auch unzulässige und in hohem Masse unerwünschte Bremsgeräusche aus. Natürlich kann nicht nur die Belag-Stirnfläche ausschlagen, auch der Belaghalter selbst kann im Laufe der Zeit im Bereich seiner Anlageflächen für den Belag geschädigt werden.

Davon ausgehend besteht die Aufgabe der Erfindung darin, einen Bremsbelaghalter der in Rede stehenden Art so auszugestalten, dass der Bremsbelag ohne jegliches Spiel in seiner Belagführung gehaltert werden kann. Es soll insbesondere möglich sein, den Bremsbelag in seiner Führung, z.B. in einer Schwalbenschwanzführung, so zu verspannen, dass ein Ausschlagen des Belages an den beiden Stirnseiten absolut sicher vermeidbar ist. Gleichzeitig soll es möglich sein, einen Belagwechsel ohne grossen Aufwand vornehmen zu können.

Zur Lösung dieser Aufgabe dienen die Merkmale nach dem Kennzeichnungsteil des Patentanspruches 1.

Durch den Exzenter ist es mit Hilfe eines an ihm angreifenden Drehwerkzeuges möglich, den zur stirnseitigen Halterung des Bremsbelages dienenden, begrenzt axial beweglich geführten Querriegel des Belaghalters zu verspannen, derart, dass der seinerseits vom Querriegel verspannte Belag in seiner Führung absolut sicher, d.h. ruckfrei gehaltert werden kann. Der Exzenter ist vorzugsweise unverlierbar am stirnseitigen Endteil des Belaghalters drehbar geführt und wirkt über das mit ihm verbundene Spannteil direkt auf den axial begrenzt beweglich geführten Querriegel des Belaghalters ein. Zum Drehen des Exzenters wird vorzugsweise ein vom Exzenter lösbarer Stangenkörper verendet, mit welchem ausreichend Hebelkraft zur Verfügung steht, um den Exzenter drehen zu können.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Fig. 1 ist eine Teil-Schnittansicht des den Querriegel aufweisenden Endes eines Bremsbelaghalters unter Teilschnitt-Darstellung der Exzenteranordnung nach der Erfindung;

Fig. 2 ist eine Draufsicht der Anordnung nach Fig. 1;

Fig. 3 ist eine Einzelansicht des Exzenters der Anordnung nach Fig. 1 und 2;

Fig. 4 ist eine Unteransicht des Exzenters unter Darstellung seines Spannteils, und

Fig. 5 ist eine der Fig. 2 vergleichbare Ansicht unter Darstellung des Querriegels in seiner durch den Exzenter verspannten Lage.

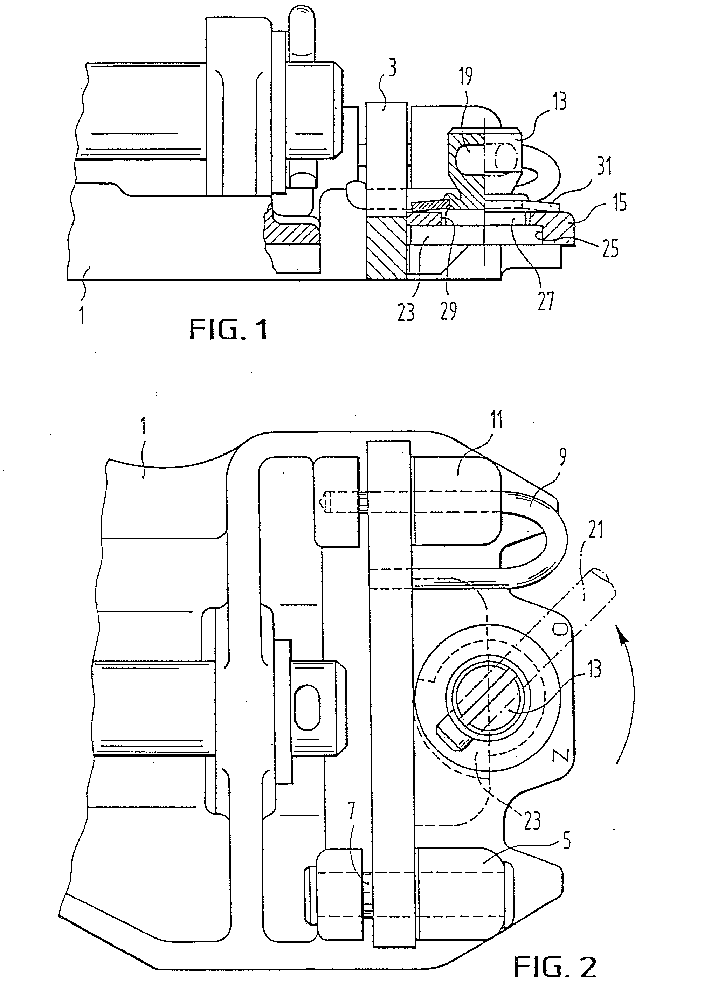

Der in Fig. 1 der Zeichnung in Teilschnittansicht wiedergegebene Belaghalter 1 weist einen Querriegel 3 auf, welcher in an sich bekannter Weise an einem Lager 5 gelagert, d.h. um einen Zapfen 7 drehbar und an seinem entgegengesetzten Ende (Fig. 2) mittels eines Verschlussbügels 9 oder dergleichen Spannelement gegenüber einem Lager 11 verspannbar ist. Der Querriegel 3 wird zum Einschieben und zum Herausziehen des (nicht dargestellten) Bremsbelages in seine geöffnete Stellung verschwenkt und dient in geschlossener Lage dazu, dem Bremsbelag innerhalb der im Belaghalter 1 befindlichen Führungen zu halten. Hierbei stützt sich der Bremsbelag an seinem einen Ende an der (nicht dargestellten) geschlossenen Belagführung und am entgegengesetzten Ende an dem in der Zeichnung dargestellten Querriegel 3 ab, wenn sich dieser in seiner geschlossenen Lage befindet.

Der Querriegel 3 besitzt auf dem Zapfen 7 und auf dem Verschlussbügel 9, welche entsprechende Bohrungen des Querriegels durchdringen, ein gewisses axiales Spiel, da die lichte Weite im Bereich der Lager 5 und 11 in der aus Fig. 2 ersichtlichen Weise etwas grösser ist als der Dicke des Querriegels entspricht.

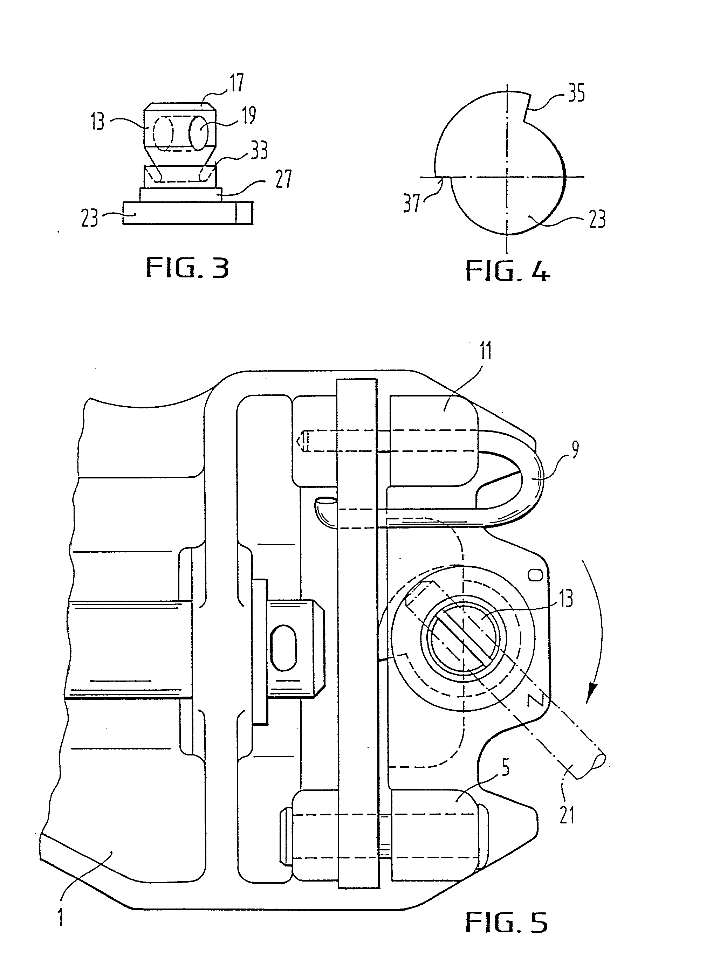

Gemäss der Erfindung sind Mittel vorgesehen, mit welchen der Querriegel 3 bei eingeführtem Bremsbelag in Richtung des Bremsbelags (nicht dargestellt) verspannbar ist. Zu diesem Zweck ist am stirnseitigen Ende des Belaghalters 1 ein Exzenter 13 drehbar eingesetzt und wirkt gegenüber dem Querriegel 3, derart, dass der Querriegel mit Hilfe des Exzenters 13 in Axialrichtung verspannbar ist. Der Exzenter 13 kann auch verschiedene Weise am stirnseitigen Endteil 15 des Belaghalters 1 drehbar gelagert sein. Der Exzenter 13 besitzt im dargestellten Ausführungsbeispiel gemäss Fig. 3 einen Kopf 17 mit einer Öffnung 19 zum Einführen eines Stangenkörpers 21 (Fig. 2), mit welchem der Exzenter gedreht wird. Das mit dem Kopf 17 verbundene, exzenterförmig ausgebildete (Fig. 4) Spannteil 23 befindet sich gemäss Fig. 1 in einer Ausnehmung 25 des Endteils 15 des Belaghalters, wobei der das Spannteil mit dem Kopf 17 verbindende Bund 27 unter einem gewissen Spiel die Öffnung 29 im Endteil des Belaghalters durchsetzt. Bei der dargestellten Ausführungsform ist eine Tellerfeder 31 zur unverlierbaren Halterung des Exzenters 13 vorgesehen. Die Tellerfeder 31 ist durch Umbördeln der am Exzenter ausgebildeten Kante 33 an der Oberseite des Endteils 15 des Belaghalters 1 unter einer gewissen Verspannung fixierbar, derart, dass der Exzenter einerseits durch das Spannteil 23 und andererseits durch die Tellerfeder 31 am Endteil 15 des Belaghalters 1 drehbar und unverlierbar geführt ist.

Wird der Exzenter 13 nach Einschieben eines Stangenkörpers 21 aus der in Fig. 2 dargestellten Lage die in Fig. 5 dargestellte Lage verdreht, d.h.

aus der Position «O» in die Position «Z», dann wirkt das exzentrisch, also kurvenförmig ausgebildete Spannteil 23 gegenüber der zugewandten Stirnseite des Querriegels 3, wodurch dieser gemäss Fig. 5 nach links gerichtet verschoben wird. Hierdurch wird der Querriegel 3 einerseits gegenüber dem stirnseitigen Ende des (nicht dargestellten) Bremsbelages verspannt. Der Bremsbelag kann sich in seiner Belagführung nich mehr axial bewegen, d.h. ein Ausschlagen der Belag-Stirnflächen infolge ruckartiger Bewegung des Belages im Belaghalter ist ausgeschlossen. In gleicher Weise werden unzulässige Bremsgeräusche, hervorgerufen durch derartige ruckartige Bewegungen, vermieden.

In der in Fig. 5 dargestellten Position stützt sich das Spannteil unmittelbar diametral gegenüber dem Berührungspunkt bezüglich des Querriegels an der zylindrischen Fläche der Ausnehmung 25 des Belaghalters ab d.h., dass der Bund 27 auch in verspannter Lage des Exzenters ein gewisses Spiel gegenüber der ihn aufnehmenden Öffnung 29 beibehält. In geschlossenem Zustand ist die Vorspannung durch Selbsthemmung (hinreichend geringe Exzentersteigung am Spannteil) und durch Reibschluss (Vorspannung der Tellerfeder 31) gesichert. Sowohl die geöffnete Position des Exzenters gemäss Fig. 2 als auch die geschlossene Position des Exzenters gemäss Fig. 5 ist vorzugsweise durch Anschlage festgelegt, um ein Überdrehen zu vermeiden. Hierzu ist das Spannteil 23 (Fig. 4) mit Anschlagflächen 35 und 37 versehen, die sich in der aus Fig. 2 und Fig. 5 ersichtlichen Weise an Anschlägen an der Unterseite des Belaghalters anlegen.

*Bezugszeichenliste*

1   Belaghalter
3   Querriegel
5   Lager
7   Zapfen
9   Verschlussbügel
11  Lager
13  Exzenter
15  Endteil
17  Kopf
19  Öffnung
21  Stangenkörper
23  Spannteil
25  Ausnehmung
27  Bund
29  Öffnung
31  Tellerfeder
33  Kante
35  Anschlagfläche
37  Anschlagfläche

## Patentansprüche

1. Bremsbelaghalter für Schienenfahrzeuge, mit einem in einer Führung des Belaghalters einführbaren Bremsbelag, welcher an einem Ende durch das stirnseitig geschlossene Ende der Belagführung und am entgegengesetzten Ende durch einen in Querrichtung schwenkbaren Querriegel (3) in seiner Lage gehalten ist, gekennzeichnet durch eine den Querriegel (3) in Richtung des Bremsbelages verspannende Exzentervorrichtung (13, 23) zur sicheren Halterung des Bremsbelages.

2. Bremsbelaghalter nach Anspruch 1, dadurch gekennzeichnet, dass die Exzentervorrichtung aus einem am stirnseitigen Endteil (15) des Belaghalters (1) drehbar gelagerten Exzenter (13) besteht, welcher ein mit Keilwirkung gegenüber dem Querriegel (3) wirkendes Spannteil (23) trägt.

3. Bremsbelaghalter nach Anspruch 2, dadurch gekennzeichnet, dass der Exzenter (13) eine Öffnung (23) im Endteil (15) des Belaghalters (1) durchsetzt, derart, dass das mit dem Exzenter verbundene Spannteil (23) an der Unterseite des Endteils (15) gegenüber dem Querriegel (3) wirkt, während sich der Kopf (17) des Exzenters auf der entgegengesetzten oberen Seite des Endteils (15) des Belaghalters (1) erstreckt, wobei der Exzenter durch das Spannteil (23) auf einer Seite des Belaghalters und durch eine Tellerfeder (31) auf der entgegengesetzten oberen Seite unverlierbar am Belaghalter (1) gehalten ist.

4. Bremsbelaghalter nach Anspruch 2 oder 3, dadurch gekennzeichnet, dass der Kopf (17) des Exzenters (13) eine Öffnung (19) zum Einführen eines zum Drehen dienenden Stangenkörpers (21) aufweist.

5. Bremsbelaghalter nach einem der vorangehenden Ansprüche, dadurch gekennzeichnet, dass der Exzenter aus einem Drehkörper und aus einem mit dem Drehkörper verbindbaren, am Belaghalter (1) unverlierbar geführten, gegenüber dem Querriegel wirkenden Spannkörper besteht.

6. Bremsbelaghalter nach einem der vorangehenden Ansprüche, gekennzeichnet durch die Positionen des Exzenters (13) zwischen geöffneter und geschlossener Lage festlegende Anschläge am Belaghalter (1).

## Claims

1. Brake lining holder for rail vehicles, having a brake lining which can be inserted in a guideway of the lining holder, this brake lining being retained in its position at one end by the end of the lining guideway which is closed at the front, and at the opposite end by a crossbar (3) which is pivotable in the transverse direction, characterised by a cam device (13, 23) clamping the crossbar (3) in the direction of the brake lining for securely retaining said brake lining.

2. Brake lining holder according to claim 1, characterised in that the cam device comprises a cam (13) rotatably mounted on the front end portion (15) of the lining holder (1), this cam carrying a clamping part (23) acting with a wedge effect with respect to the crossbar (3).

3. Brake lining holder according to claim 2, characterised in that the cam (13) penetrates an aperture (23) in the end portion (15) of the brake lining holder (1) so that the clamping part (23) connected to the cam acts on the underside of the end portion (15) with respect to the crossbar (3) whilst the head (17) of the cam extends on the opposite upper side of the end portion (15) of the lining holder (1), and the cam is securely mounted on the lining holder (1) by the clamping portion (23) on one side of the lining holder and by a plate spring (31) on the opposite upper side.

4. Brake lining holder according to claim 2 or 3, characterised in that the head (17) of the cam (13) has an aperture (19) for the insertion of a rod member (21) used for rotation.

5. Brake lining holder according to one of the preceding claims, characterised in that the cam comprises a rotary body and a clamping body which can be connected to the rotary body, is securely guided on the lining holder (1), and operates with respect to the crossbar.

6. Brake lining holder according to one of the preceding claims, characterised by stops on the lining holder (1) determining the positions of the cam (13) between the open and closed state.

## Revendications

1. Support pour garnitures de frein pour des véhicules sur rails, avec une garniture de frein qui est susceptible d'être introduite dans un guidage et qui est supportée dans sa position, à une extrémité, par l'extrémité frontale de guidage pour la garniture, et, à l'extrémité opposée, par un verrou transversal (3) qui est susceptible d'être basculé dans la direction transversale, caractérisé par un dispositif à excentrement (13, 23) qui bloque le verrou transversal (3) en direction de la garniture de frein pour un support sûr de cette dernière.

2. Support de garniture de frein selon la revendication 1, caractérisé par le fait que le dispositif à excentrement est constitué par un excentrique (13) monté à rotation sur la partie d'extrémité frontale (15) du support de garniture (1), et portant un élément de blocage (23) agissant avec un effet de coin sur le verrou transversal (3).

3. Support de garniture de frein selon la revendication 2, caractérisé par le fait que l'excentrique (13) passe dans une ouverture (23) ménagée dans la partie d'extrémité (15) du support de garniture (1), la réalisation étant telle que l'élément de blocage (23) qui est relié à l'excentrique agit du côté inférieur de la partie d'extrémité (15) sur le verrou transversal (3), alors que la tête (17) de l'excentrique s'étend sur le côté supérieur opposé de la partie frontale (15) du support de garniture (1), l'excentrique étant supporté de façon non perdable par le support de garniture (1), à l'aide de l'élément de blocage (23), sur un côté du support de garniture, et par un ressort Belleville, sur le côté supérieur opposé.

4. Support de garniture selon la revendication 2 ou 3, caractérisé par le fait que la tête (17) de l'excentrique (13) comporte une ouverture (19) pour l'introduction d'un corps en forme de tige (21) servant à la rotation.

5. Support de garniture selon l'une des revendications précédentes, caractérisé par le fait que l'excentrique est constitué par un corps capable de tourner et par un corps de blocage susceptible d'être relié audit corps capable de tourner, guidé de façon imperdable sur le support de garniture (1) et agissant à l'encontre du verrou transversal.

6. Support de garniture selon l'une des revendications précédentes, caractérisé par le fait que des butées qui sont prévues sur le support de garniture (1) déterminent les positions de l'excentrique (13), entre la position ouverte et fermée.

FIG. 1

FIG. 2

FIG. 3

FIG. 4

FIG. 5